(19) Europäisches Patentamt
European Patent Office
Office européen des brevets

(11) **EP 2 394 970 A1**

(12) **EUROPEAN PATENT APPLICATION**
published in accordance with Art. 153(4) EPC

(43) Date of publication:
**14.12.2011 Bulletin 2011/50**

(51) Int Cl.:
*C03C 10/14* (2006.01)     *F24C 15/10* (2006.01)
*H05B 6/12* (2006.01)

(21) Application number: **10738539.5**

(22) Date of filing: **03.02.2010**

(86) International application number:
**PCT/JP2010/051490**

(87) International publication number:
**WO 2010/090208 (12.08.2010 Gazette 2010/32)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **05.02.2009 JP 2009025398**
**08.01.2010 JP 2010002757**
**08.01.2010 JP 2010002761**

(71) Applicant: **Nippon Electric Glass Co., Ltd.**
**Otsu-shi**
**Shiga 520-8639 (JP)**

(72) Inventors:
• **FUJISAWA, Tai**
**Otsu-shi**
**Shiga 520-8639 (JP)**
• **NAKANE, Shingo**
**Otsu-shi**
**Shiga 520-8639 (JP)**

(74) Representative: **Tetzner, Michael**
**Van-Gogh-Strasse 3**
**81479 München (DE)**

(54) **CRYSTALLIZED GLASS AND TOP PLATE FOR COOKING DEVICE COMPRISING SAME**

(57)     A crystallized glass comprises, in term of mass%, 55 to 73% of $SiO_2$, 17 to 25% of $Al_2O_3$, 2 to 5% of $Li_2O$, 4 to 5.5% of $TiO_2$, 0.05 to less than 0.2% of $SnO_2$, and 0.02 to 0.1% of $V_2O_5$. The crystallized glass has a ratio $V_2O_5/(SnO_2+V_2O_5)$ of 0.2 to 0.4 and is substantially free of $As_2O_3$ and $Sb_2O_3$.

EP 2 394 970 A1

**Description**

Technical Field

The present invention relates to crystallized glass for used in a top plate for cooking device with an induction heating unit (IH), a halogen heater, or the like as a heat source.

Background Art

A top plate used in a cooking device with IH, a halogen heater, or the like as a heat source is required to be hardly broken (to have high mechanical strength and high thermal shock resistance), to have aesthetically pleasing external appearance, to be hardly corroded (to have high chemical resistance), to have a high transmittance of infrared light as a heat ray, and the like. As a material satisfying those characteristics, there is known low-expansion transparent crystallized glass containing a β-quartz solid solution ($Li_2O$-$Al_2O_3$-$nSiO_2$ (n≥2)) as a main crystal, which is used as a top plate for cooking device.

The low-expansion transparent crystallized glass is produced through a blending step of mixing various glass rawmaterials in a predetermined ratio, a melting step of melting the glass raw materials at high temperature of 1600 to 1900°C to form a homogenized fluid, a forming step of forming the fluid into various shapes by various methods, an annealing step of removing distortion, and a crystallization step of precipitating fine crystals. The crystallization step includes a crystal nucleation step of precipitating fine crystals to be nuclei of crystals and a crystal growth step of growing the crystals.

The low-expansion transparent crystallized glass thus produced is generally transparent to visible light. Therefore, when the low-expansion transparent crystallized glass is used as a top plate as it is, an internal structure of a cooking device placed below the top plate is seen directly, which degrades external appearance. Therefore, the low-expansion transparent crystallized glass is used with visible light shielded sufficiently by coloring the crystallized glass with a coloring agent such as $V_2O_5$ (see, for example, Patent Document 1) or forming a light-shielding film on a surface of the crystallized glass (see, for example, Patent Document 2).

By the way, it is considered that the coloring of glass with a coloring agent such as $V_2O_5$ is caused (intensified) by an interaction between the coloring agent and $As_2O_3$ or $Sb_2O_3$ used as a fining agent. However, an environmental burden caused by $As_2O_3$ or $Sb_2O_3$ is large, and hence the use thereof has been being limited in recent years. If $As_2O_3$ or $Sb_2O_3$ is simply excluded from a conventional glass composition, coloring efficiency by a coloring agent tends to decrease. Although the effect of shielding visible light can also be enhanced by increasing the amount of a coloring agent, there is a problem that the infrared light transmittance decreases according to this method.

On the other hand, it is proposed that, for example, $SnO_2$ or the like is added as a component for enhancing the coloring efficiency of a coloring agent, instead of $As_2O_3$ or $Sb_2O_3$ (see, for example, Patent Document 3). According to this method, a top plate having a small environmental burden and being excellent in infrared light transparency and visible light shielding property can be obtained.

Citation List

Patent Document

Patent Document 1: JP 03-9056 B
Patent Document 2: JP 2003-68435 A
Patent Document 3: JP 2004-523446 A

Summary of Invention

Technical Problem to be solved by the Invention

Although the crystallized glass disclosed in Patent Document 3 has excellent infrared light transparency at the beginning of its use, there is a problem that the infrared light transmittance decreases during a long period of use. It is important that the high infrared light transmittance can be kept even after a long period of use, from the viewpoint of energy saving as well as cooking performance.

Further, the visible light transparency decreases after a long period of use, and hence there is a problem that only a heating portion is liable to be discolored, although cooking performance is not influenced directly.

Thus, a technical object of the present invention is to provide crystallized glass that has sufficient visible light shielding property and a high infrared light transmittance, these characteristics being unlikely to be impaired even after a long period of use, and a top plate for cooking device using such crystallized glass.

Solution to Solve the Technical Problem

The inventors of the present invention have earnestly studied and, as a result, found that the above-mentioned problems can be solved by limiting the contents of $V_2O_5$ and $Ti_2O$, a blend ratio between $V_2O_5$ and $SnO_2$ and the like in crystallized glass within particular ranges and thus propose the finding as a first invention.

That is, the first invention relates to a crystallized glass, comprising, in term of mass%, 55 to 73% of $SiO_2$, 17 to 25% of $Al_2O_3$, 2 to 5% of $Li_2O$, 4 to 5.5% of $TiO_2$, 0.05 to less than 0.2% of $SnO_2$, and 0.02 to 0.1% of $V_2O_5$, wherein the crystallized glass has a ratio $V_2O_5/(SnO_2+V_2O_5)$ of 0.2 to 0.4 and is substantially free of $As_2O_3$ and $Sb_2O_3$.

As described above, $V_2O_5$ has a function of decreasing an infrared light transmittance while acting as a coloring agent. In the present invention, the content of $V_2O_5$ is limited to a small amount as far as possible, namely to 0.02 to 0.1%, the blend ratio between $SnO_2$ and $V_2O_5$ is adjusted so that $V_2O_5/(SnO_2+V_2O_5)$ is 0.2 to 0.4, and also the content of $TiO_2$ is adjusted to a relatively large amount, namely to 4 to 5.5%. As a result, the coloring efficiency of $V_2O_5$ can be enhanced so that the internal structure of a cooking device can be shielded sufficiently while a high infrared light transmittance is kept.

The crystallized glass of the present invention preferabley further comprises 0.5% or less of $Na_2O$.

The crystallized glass of the present invention preferabley further comprises 0 to 2.3% of $ZrO_2$.

In the crystallized glass of the present invention, the total amount of $TiO_2$ and $ZrO_2$ is preferable to being 4 to 6.5%.

The crystallized glass of the present invention preferably has a transmittance of 35% or less at a wavelength of 700 nm and a transmittance of 85% or more at a wavelength of 1150 nmwhen the crystallized glass has a thickness of 3 mm. In the present invention, the transmittance of crystallized glass is measured using a sample of crystallized glass whose surfaces are mirror polished.

Further, the inventors of the present invention have earnestly studied and, as a result, found that the decrease in transparency of visible light and infrared light during a long period of use is caused by the following phenomenon. That is, when crystallization in glass has not proceeded sufficiently, the crystallized glass is involved in an additional crystallization due to further heating, thereby the composition of a matrix glass phase of the crystallized glass changes. Then, the inventors have found that the above-mentioned problems can be solved by conducting heat treatment so that the crystallization in glass proceeds sufficiently, and thus propose the finding as a second invention.

That is, the second invention relates to a method of producing crystallized glass, including the steps of: (1) blending raw material powder so as to comprise, in terms of mass%, 55 to 73% of $SiO_2$, 17 to 25% of $Al_2O_3$, 2 to 5% of $Li_2O$, 2.6 to 5.5% of $TiO_2$, 0.01 to 0.3% of $SnO_2$, and 0.02 to 0.2% of $V_2O_5$, and being substantially free of $As_2O_3$ and $Sb_2O_3$; (2) melting the raw material powder to produce precursor glass; and (3) heat-treating the precursor glass in a temperature range of 765 to 785˚C for at least 10 minutes to form crystal nuclei in the precursor glass.

For crystallizing the precursor glass having the above-mentioned composition, a number of crystal nuclei can be precipitated by conducting heat treatment in a temperature range of 765 to 785˚C for at least 10 minutes. After that, crystals are allowed to grow, and thus the crystallization can proceed sufficiently within a short period of time. Therefore, in the crystallized glass produced according to the present invention, the crystallization hardly proceeds even when the crystallized glass is subjected to heating thereafter. As a result, a change in composition of the matrix glass phase involved in heating can be suppressed and a change in transparency characteristics in a visible light region and an infrared light region with the passage of time can be reduced.

The method of producing crystallized glass of the present invention preferably further includes the step of (4) heat-treating the precursor glass, in which the crystal nuclei have been formed, in a temperature range of 800 to 930˚C for at least 10 minutes to grow a crystal. This enables the crystallization to further proceed, and a change in transparency characteristics in the visible light region and the infrared region with the passage of time can be reduced further.

The crystallized glass produced by the method of producing crystallized glass of the present invention has, for example, an absorbance change ratio of 20% or less at a wavelength of 700 nm after heat treatment at 900˚C for 50 hours.

In the present invention described above, the coloring mechanism of crystallized glass is as follows.

V ions are present mainly in a trivalent to pentavalent state in glass, and it is presumed that the coloring of crystallized glass is caused by tetravalent V ions present in a matrix glass phase. Further, it is known that, when the tetravalent V ions are bonded to $TiO_2$ present in the matrix glass phase, the degree of coloring is further enhanced (visible light transmittance decreases). Thus, the coloring of the crystallized glass is largely influenced by the amounts of the tetravalent V ions and $TiO_2$ in the matrix glass phase.

On the other hand, it is known that the valence of the V ions changes due to the presence of Sn (in particular, the oxidation-reduction function of Sn ions). That is, it is considered that a blend ratio between $V_2O_5$ and $SnO_2$ influences

the degree of coloring. In particular, by limiting the blend ratio between $V_2O_5$ and $SnO_2$ to the range in the first invention, the amount of tetravalent V ions increases and the effect of coloration of $V_2O_5$ can be exerted fully.

By the way, when the crystallized glass of the present invention is used, for example, as a top plate for cooking device for a long period of time, the crystallization further proceeds due to the heating during the use. When the crystallization further proceeds, the matrix glass composition changes, so that the concentrations of the tetravalent V ions and $TiO_2$, which do not contribute to the crystal composition, increase relatively in the matrix glass phase. As a result, a bonding state between the tetravalent V ions and $TiO_2$ changes, thereby the transmittance in the visible light region and the infrared region changes. In the crystallized glass of the present invention, $TiO_2$ is present in an excess amount with respect to the tetravalent V ions, and hence the bonding state between the tetravalent V ions and $TiO_2$ is hard to be changed even when the matrix glass composition changes after a long period of use, and the visible light transmittance is unlikely to change.

The crystallized glass of the present invention is crystallized glass containing a β-quartz solid solution as a main crystal, and has a property in which crystal transition from the β-quartz solid solution to a β-spodumene solid solution ($Li_2O$-$Al_2O_3$-$nSiO_2$ ($n\geq4$)) may occur due to the heating during a long period of use, thereby white turbidity is generated. When white turbidity is generated in the crystallized glass, the external appearance thereof changes and the infrared light transmittance decreases due to scattering. It is known that $As_2O_3$ and $Sb_2O_3$ are components each having a function of largely promoting the crystal transition. The crystallized glass of the present invention is substantially free of $As_2O_3$ and $Sb_2O_3$, and hence has a feature in which the crystal transition is unlikely to occur and the transmittance change in the visible light region and the infrared light region during a long period of use is small. Further, it is known that $V_2O_5$ also has a function of promoting the crystal transition, and the above-mentioned effect canbe enhanced by limiting the content of $V_2O_5$ to a small amount as in the first invention.

Further, the environmental burden of $As_2O_3$ or $Sb_2O_3$ is said to be large, and hence the use thereof has been limited in recent years. The crystallized glass of the present invention is substantially free of these components, and hence can reduce the environmental burden at a time of the disposal of the crystallized glass. The expression "substantially free of" in the present invention refers to a level at which these components are not intentionally added as components of the glass composition, in other words, these components come to be mixed in various glass rawmaterials as impurities, and specifically, refers to a content of 0.1% or less.

Description of Embodiments

Hereinafter, the reason why the composition of glass is limited as above in the first invention is described.

$SiO_2$ is a component that forms a skeleton of glass and forms a β-quartz solid solution. The content of $SiO_2$ is 55 to 73%, preferably 60 to 71%, more preferably 63 to 70%. When the content of $SiO_2$ decreases, the thermal expansion coefficient tends to increase, which makes it difficult to obtain crystallized glass excellent in thermal shock resistance. Further, the chemical resistance tends to decrease. On the other hand, when the content of $SiO_2$ increases, the meltability of glass is degraded and the viscosity of glass melt increases, and thus forming of glass tends to be difficult.

$Al_2O_3$ is a component that forms a skeleton of glass and forms a β-quartz solid solution. The content of $Al_2O_3$ is 17 to 25%, preferably 17.5 to 24%, more preferably 18 to 22%. When the content of $Al_2O_3$ decreases, the thermal expansion coefficient tends to increase, which makes it difficult to obtain crystallized glass excellent in thermal shock resistance. Further, the chemical resistance tends to decrease. On the other hand, when the content of $Al_2O_3$ increases, the meltability of glass is degraded and the Viscosity of glass melt increases, and thus forming of glass tends to be difficult. Further, the glass tends to be devitrified due to precipitation of mullite crystals, and cracks are liable to occur in glass from the devitrified portion, which makes forming of glass difficult.

$Li_2O$ is a component that forms a β-quartz solid solution and is also a component that has a large effect on crystallinity and decreases the viscosity of glass to enhance the meltability and formability. The content of $Li_2O$ is 2 to 5%, preferably 2.3 to 4.7%, more preferably 2.5 to 4.5%. When the content of $Li_2O$ decreases, glass tends to be devitrified due to precipitation of mullite crystals, and cracks are liable to occur in glass from the devitrified portion, which makes forming of glass difficult. Further, when glass is crystallized, a β-quartz solid solution crystal becomes hard to be precipitated, and crystallized glass excellent in thermal shock resistance becomes hard to be obtained. Further, the meltability of glass tends to decrease and the viscosity of glassmelt tends to increase, whichmakes forming of glass difficult. On the other hand, when the content of $Li_2O$ increases, the crystallinity becomes too strong, and a coarse crystal is liable to be precipitated in a crystallization step. As a result, transparent crystallized glass is hard to be obtained due to white turbidity, or the resultant glass is liable to be broken, which makes forming of glass difficult.

$TiO_2$ is a component that forms crystal nuclei for precipitating crystals in a crystallization step, and has a function of enhancing the coloration of tetravalent V ions. The content of $TiO_2$ is 4 to 5.5%, preferably 4.1 to 5.3%, more preferably 4.2 to 5.1%. When the content of $TiO_2$ decreases, the amount of $TiO_2$ that is not used as crystal nuclei and remains in a matrix glass phase becomes small. Therefore, $TiO_2$ is hard to be bonded to the tetravalent V ions, and the efficiency of the coloration tends to decrease. Further, proceeding with crystallization during a long period of use, as described above, the concentrations of the tetravalent V ions and $TiO_2$ in the glass matrix increase, and the bonding state therebetween changes. Therefore, the degree of coloring tends to change unfavorably (in particular, the color tends to become deep) . Further, a sufficient number of crystal nuclei are not formed, and hence the grain diameter of a crystal growing from each crystal nucleus becomes large (coarse crystal) to generate white turbidity, so that transparent crystallized glass is hard to be obtained. On the other hand, when the content of $TiO_2$ increases, glass tends to be devitrified during the step from melting to forming, and thus the glass becomes liable to be broken, which makes forming of glass difficult.

$SnO_2$ is a component that increases the tetravalent V ions as a coloring component to enhance the coloration. The content of $SnO_2$ is 0.05 to less than 0.2%, preferably 0.06 to 0.18%, more preferably 0.07 to 0.15%. When the content of $SnO_2$ decreases, the tetravalent V ions are not generated efficiently, and hence the effect of coloration is hard to be enhanced. When the content of $SnO_2$ increases, glass tends to be devitrified during melting and forming, which makes forming of glass difficult. Further, a color tone tends to change due to slight differences in melting conditions and crystallization conditions even with the same composition.

$V_2O_5$ is a coloring component. The content of $V_2O_5$ is 0.02 to 0.1%, preferably 0.02 to 0.05%. When the content of $V_2O_5$ decreases, the coloring becomes weak, so that visible light can not be shielded sufficiently. On the other hand, when the content of $V_2O_5$ increases, the transmittance of infrared light tends to decrease. Further, crystal transition from a β-quartz solid solution to a β-spodumene solid solution becomes liable to be occurred, which may cause white turbidity.

Regarding the blend ratio between $V_2O_5$ and $SnO_2$2, the mass ratio of $V_2O_5/ (SnO_2+V_2O_5)$ is 0.2 to 0.4, preferably 0.25 to 0.35. If the blend ratio between $V_2O_5$ and $SnO_2$ becomes larger or smaller than this range, a high effect of coloration is hard to be obtained because the amount of tetravalent V ions decreases.

Further, in addition to the above-mentioned components, various components can be added to the crystallized glass of the present invention in a range not impairing the required characteristics.

MgO is a component that forms a solid solution in a β-quartz solid solution crystal in place of $Li_2O$. The content of MgO is 0 to 1.5%, preferably 1 to 1.4%, more preferably 0.1 to 1.2%. When the content of MgO increases, the resultant glass tends to be devitrified because the crystallization becomes too strong. As a result, the glass is liable to be broken to make forming of glass difficult.

ZnO is a component that forms a solid solution in a β-quartz solid solution crystal in a similar manner to MgO. The content of ZnO is 0 to 1.5%, preferably 0 to 1.4%, more preferably 0.1 to 1.2%. When the content of ZnO increases, the crystallinity tends to become too strong. Therefore, when forming is performed with gradual cooling, glass is devitrified to be liable to be broken, which is unsuitable for forming, for example, by a float method.

$ZrO_2$ is a component that forms crystal nuclei for precipitating crystals in a crystallization step in a similar manner to $TiO_2$. The content of $ZrO_2$ is 0 to 2.3%, preferably 0 to 2.1%, more preferably 0.1 to 1.8%. When the content of $ZrO_2$ increases, glass tends to be devitrified during melting and forming steps, which makes forming of glass difficult.

$P_2O_5$ is a component that promotes the phase separation of glass. Since crystal nucleus is likely to be generated in a region where glass causes phase separation, $P_2O_5$ has a function of promoting the formation of crystal nucleus. The content of $P_2O_5$ is 0 to 2%, preferably 0.1 to 1%. When the content of $P_2O_5$ increases, the glass causes phase separation during the melting step. Therefore, the glass having a desired composition is hard to be obtained, and the resultant glass tends to be opaque.

The total amount of $TiO_2$ and $ZrO_2$ is 4 to 6.5%, preferably 4.5 to 6%. When the total amount of these components increases, glass tends to be devitrified during melting and forming steps, which makes forming of glass difficult. On the other hand, when the total amount of these components is too small, crystal nuclei are not formed sufficiently, and hence the crystal is liable to become coarse. As a result, transparent crystallized glass is hard to be obtained due to white turbidity.

$Na_2O$ is a component that decreases the Viscosity of glass to enhance the meltability and formability of glass. The content of $Na_2O$ is 0.5% or less, preferably 0.3% or less, more preferably 0.2% or less. When the content of $Na_2O$ is too large, the crystal transition from a β-quartz solid solution to a β-spodumene solid solution is promoted, and hence white turbidity is liable to occur due to coarse crystals. Further, the thermal expansion coefficient tends to increase, which makes it difficult to obtain crystallized glass excellent in thermal shock resistance.

In order to decrease the Viscosity of glass to enhance the meltability and formability thereof, $K_2O$, CaO, SrO, and BaO can be added in a total amount of up to 5%. CaO, SrO, and BaO are each a component that cause devitrification when glass is melted. Therefore, it is preferable that the total amount of these components be 2% or less. Further, CaO has a function of promoting the crystal transition from a β-quartz solid solution to a β-spodumene solid solution, and hence it is preferred to refrain from using CaO as far as possible.

As a fining agent, $SO_2$ and Cl may be added alone or in combination, if required. The total amount of these components is preferably 0.5% or less. $As_2O_3$ and $Sb_2O_3$ are also fining components, however, these components are considered to have large environmental burden, and hence it is important to be substantially free of these components.

Colored transition metal elements (for example, Cr, Mn, Fe, Co, Ni, Cu, Mo, and Cd) that are not described above may absorb infrared light or may cause the loss of a reducing ability of Sn ions (the colored transition metal elements react with Sn ions to inhibit a reaction between V ions and the Sn ions). Therefore, it is preferred to refrain from containing these elements as far as possible.

The crystallized glass of the present invention, when having a thickness of 3 mm, has a transmittance at a wavelength of 700 nm of preferably 35% or less, more preferably 30% or less. This can shield the internal structure of a cooking device sufficiently. On the other hand, when a temperature, a thermal power, or the like are displayed using an LED or the like, the transmittance at a wavelength of 700 nm at a thickness of 3 mm is preferably 15% or more, 18% or more, still more preferably 20% or more. Thus, when the crystallized glass is used for a top plate of cooking device with IH or the like, the display by an LED or the like can be recognized sufficiently through the crystallized glass.

Further, as another indication, the crystallized glass of the present invention preferably has an absorbance change ratio of 10% or less at a wavelength of 700 nm after heat treatment at 900˚C for 50 hours. An absorbance change ratio is calculated as follows.

$$\text{Absorbance} = \log_{10}(\text{transmittance (\%)}/100)$$

$$\text{Absorbance change ratio} = (\text{absorbance after heat treatment} - \text{absorbance before heat treatment})/\text{absorbance before heat treatment} \times 100 \ (\%)$$

Further, the crystallized glass of the present invention, when having a thickness of 3 mm, has a transmittance of preferably 85%, more preferably 86% or more at a wavelength of 1150 nm, in order to transmit a heat ray (infrared light) efficiently.

It is preferred that, even when the crystallized glass of the present invention is used for such application as a top plate for cooking device for a long period of time, the high infrared light transmittance be not impaired, and also the visible light transmittance be hard to be changed. Specifically, it is preferred that the crystallized glass of the present invention has, in an acceleration test, a change amount of a transmittance of 5% or less, 3% or less, 2% or less, 1.5% or less, particularly 1% or less, at a wavelength of 1150 nm after heat treat treatment at 900˚C for 50 hours. Further, in the above acceleration test, it is preferred that a change amount of a transmittance at a wavelength of 700 nm be 5% or less, 3% or less, 2% or less, 1.5% or less, particularly 1% or less.

The thermal expansion coefficient of the crystallized glass of the present invention in a temperature range of 30 to 750˚ is preferably -10 to $30 \times 10^{-7}/˚C$, more preferably -10 to $20 \times 10^{-7}/˚C$. When the thermal expansion coefficient is within this range, glass excellent in thermal shock resistance is obtained. In the present invention, the thermal expansion coefficient refers to a value measured by a dilatometer.

The crystallized glass of the present invention can be produced as follows.

First, various glass raw materials are blended so as to obtain the above-mentioned composition. If required, MgO or ZnO, which forms a solid solution in a crystal by replacing a part of $Li_2O$, a component for enhancing the meltability and formability of glass, a fining agent, or the like may be added.

Next, the blended glass raw materials are melted at a temperature of 1600 to 1900˚C and formed to obtain crystallizable glass. As a forming method, various forming methods such as a blow method, a press method, a roll-out method, and a float method are applicable.

After the crystallizable glass is annealed, the crystallizable glass is heat-treated at 700 to 800˚C for 10 minutes to 10 hours to form crystal nuclei. Then, the resultant is heat-treated at 800 to 900˚C for 10 minutes to 10 hours to grow β-quartz solid solution crystals to obtain crystallized glass.

The crystallized glass thus produced may be subjected to post-processing such as cutting, polishing, bending, and reheat pressing, and a surface thereof may be subjected to painting, film coating, or the like.

Example 1

Tables 1 to 3 show examples (Sample Nos. 1 to 7 and 12) and comparative examples (Sample Nos. 8 to 11, 13, and 14) with respect to the first invention.

[Table 1]

# EP 2 394 970 A1

| [Mass%] | | | No. 1 | No. 2 | No. 3 | No. 4 | No. 5 |
|---|---|---|---|---|---|---|---|
| $SiO_2$ | | | 68.86 | 68.97 | 67.93 | 68.58 | 67 |
| $Al_2O_3$ | | | 20 | 20 | 21 | 19 | 20.5 |
| $Li_2O$ | | | 4.1 | 4.1 | 3.8 | 3.7 | 4.3 |
| $Na_2O$ | | | 0.5 | 0.2 | 0.4 | 0.1 | 0.2 |
| $K_2O$ | | | 0.3 | 0.5 | 0.3 | 0.5 | 0.8 |
| MgO | | | 0.8 | 0.8 | 1 | 0.7 | - |
| ZnO | | | 0.5 | 0.5 | 0.6 | 1.1 | 0.7 |
| $TiO_2$ | | | 4.8 | 4.8 | 4.3 | 5 | 4.5 |
| $ZrO_2$ | | | - | - | 0.5 | 1 | 0.8 |
| $P_2O_5$ | | | - | - | - | - | 1 |
| $SnO_2$ | | | 0.1 | 0.08 | 0.13 | 0.09 | 0.16 |
| $V_2O_5$ | | | 0.04 | 0.05 | 0.04 | 0.03 | 0.04 |
| Cl | | | - | - | - | 0.2 | - |
| Total | | | 100 | 100 | 100 | 100 | 100 |
| $V_2O_5/(V_2O_5+SnO_2)$ | | | 0.29 | 0.38 | 0.24 | 0.25 | 0.20 |
| $TiO_2+ZrO_2$ | | | 4.8 | 4.8 | 4.8 | 6 | 5.3 |
| Transmittance (%) | After crystallization | $\lambda$=700 nm | 26.2 | 23.1 | 27.1 | 28.6 | 28.0 |
| | | $\lambda$=1150 nm | 87.6 | 86.1 | 86.9 | 87.4 | 86.9 |
| | After heat treatment | $\lambda$=700 nm | 25.3 | 22.8 | 26.3 | 28.1 | 27.2 |
| | | $\lambda$=1150 nm | 87.3 | 85.2 | 86.5 | 87.5 | 86.5 |
| Absorbance change ratio (%) ($\lambda$=700 nm) | | | 3 | 1 | 2 | 1 | 2 |
| Devitrification | | | ○ | ○ | ○ | ○ | ○ |

[Table 2]

| [Mass%] | No. 6 | No. 7 | No. 8 | No. 9 | No. 10 |
|---|---|---|---|---|---|
| $SiO_2$ | 66.96 | 69.67 | 68.86 | 67.57 | 67.67 |
| $Al_2O_3$ | 21.5 | 19.3 | 20.0 | 21.4 | 19.3 |
| $Li_2O$ | 3.6 | 3.7 | 4.0 | 3.9 | 3.7 |
| $Na_2O$ | 0.1 | 0.5 | 0.4 | 0.3 | 0.5 |
| $K_2O$ | - | 0.4 | 0.4 | 0.6 | 0.4 |
| MgO | 0.4 | 0.2 | 0.7 | 0.4 | 0.2 |
| ZnO | 1.5 | 1 | 0.7 | 0.8 | 1.0 |
| $TiO_2$ | 4.8 | 4 | 3.8 | 4.0 | 6.0 |
| $ZrO_2$ | 1 | 0.7 | 1.0 | - | 0.7 |
| $P_2O_5$ | - | - | - | - | - |
| $SnO_2$ | 0.1 | 0.15 | 0.1 | 1.0 | 0.15 |
| $V_2O_5$ | 0.04 | 0.08 | 0.04 | 0.03 | 0.08 |
| Cl | - | 0.3 | - | - | 0.3 |
| Total | 100 | 100 | 100 | 100 | 100 |
| $V_2O_5/(V_2O_5+SnO_2)$ | 0.29 | 0.35 | 0.29 | 0.03 | 0.35 |
| $TiO_2+ZrO_2$ | 5.8 | 4.7 | 4.8 | 4 | 6.7 |

(continued)

| [Mass%] | | | No. 6 | No. 7 | No. 8 | No. 9 | No. 10 |
|---|---|---|---|---|---|---|---|
| Transmittance (%) | After crystallization | $\lambda$=700 nm | 27.0 | 21.8 | 27.1 | 65.2 | 18.4 |
| | | $\lambda$=1150 nm | 86.1 | 87.7 | 86.5 | 89.3 | 82.4 |
| | After heat treatment | $\lambda$=700 nm | 26.7 | 21.2 | 14.5 | 60.4 | 16.3 |
| | | $\lambda$=1150 nm | 85.4 | 86.0 | 69.4 | 88.6 | 81.7 |
| Absorbance change ratio (%) ($\lambda$=700 nm) | | | 1 | 2 | 48 | 18 | 7 |
| Devitrification | | | ○ | ○ | ○ | × | × |

[Table 3]

| [Mass%] | | | No. 11 | No. 12 | No. 13 | No. 14 |
|---|---|---|---|---|---|---|
| $SiO_2$ | | | 67.82 | 67.73 | 67.31 | 65.5 |
| $Al_2O_3$ | | | 20.5 | 21.5 | 21.4 | 21.9 |
| $Li_2O$ | | | 4.3 | 4.0 | 3.8 | 4.4 |
| $Na_2O$ | | | 0.3 | 0.7 | 0.6 | 0.3 |
| $K_2O$ | | | 0.3 | 0.1 | 0.1 | 0.3 |
| MgO | | | 0.6 | 0.7 | 1 | 0.8 |
| ZnO | | | 0.2 | 0.2 | 1.6 | 1.7 |
| $TiO_2$ | | | 4.2 | 4.5 | 2.4 | 4.3 |
| $ZrO_2$ | | | 1.2 | 0.2 | 1.5 | - |
| $P_2O_5$ | | | 0.5 | 0.2 | - | - |
| $SnO_2$ | | | 0.04 | 0.12 | 0.22 | - |
| $V_2O_5$ | | | 0.04 | 0.05 | 0.07 | 0.1 |
| $As_2O_3$ | | | - | - | - | 0.7 |
| Total | | | 100 | 100 | 100 | 100 |
| $V_2O_5/(V_2O_5+SnO_2)$ | | | 0.50 | 0.29 | 0.24 | 1.0 |
| $TiO_2+ZrO_2$ | | | 5.4 | 4.7 | 3.9 | 4.3 |
| Transmittance (%) | After crystallization | $\lambda$=700 nm | 70.5 | 25.4 | 33.5 | 20.6 |
| | | $\lambda$=1150 nm | 87.1 | 86.5 | 84.2 | 79.2 |
| | After heat treatment | $\lambda$=700 nm | 67.2 | 23.1 | 12.2 | 5.7 |
| | | $\lambda$=1150 nm | 86.4 | 83.2 | 65.4 | 61.3 |
| Absorbance change ratio (%) ($\lambda$=700 nm) | | | 12 | 6 | 92 | 81 |
| Devitrification | | | ○ | ○ | ○ | ○ |

Glass raw materials were blended so as to obtain the compositions described in Tables 1 to 3, and melted at 1600˚C for 20 hours, further at 1700˚C for 4 hours, using a platinum crucible. Two spacers each with a thickness of 5 mm were placed on a carbon plate, and molten glass was poured between the spacers and formed into a plate shape uniformly with a roller.

The resultant plate shaped sample was placed in an electric furnace kept at 700˚C and held for 30 minutes. After that, a power source was turned off to cool the sample to room temperature in the furnace over 10 hours or more.

Then, the cooled sample was crystallized in the electric furnace to obtain crystallized glass. The profile thereof was set as follows: nucleus formation was performed at 770˚C for 3 hours, and crystal growth was performed at 880˚C for one hour.

Each crystallized glass was evaluated for its transmittance in each of visible and infrared regions and devitrification property.

Each crystallized glass was processed into a sample having a thickness of 3 mm with both surfaces which are mirror polished, and the transmittance thereof was measured at 700 nm and 1150 nm, using a spectrophotometer (manufactured by Jasco Corporation, V-760). The measurement conditions were as follows: a measurement range of 1500 to 380 nm and a scan speed of 200 nm/min. Further, the samples subjected to heat treatment (acceleration test) at 900˚C for 50 hours were also measured for transmittance similarly.

Devitrification property was evaluated by placing each sample on a platinum foil in an electric furnace set to 1350˚C, keeping the sample in that state for 24 hours, and determining whether or not devitrification occurred. If the devitrification was not observed, the evaluation was made as "o", and if the devitrification was observed, the evaluation was made as "×".

As is apparent from Tables 1 to 3, it is understood that each of Sample Nos. 1 to 7 and 12 as examples is capable of shielding light in the visible light region sufficiently, has a high infrared light transmittance, and has a small transmittance change in each of the visible and infrared light regions even in an acceleration test in which a long-term use is assumed.

On the other hand, in Sample No. 8 as a comparative example, a change width of a transmittance in each of the visible and infrared light regions after the acceleration test was large. In each of Sample Nos. 9 and 11 as comparative examples, a transmittance in the visible light region after the crystallization was not sufficiently low. Further, in Sample No. 9 as a comparative example, devitrification was observed. In Sample No. 10 as a comparative example, the transmittance in the infrared light region after the crystallization was not sufficiently high, and devitrification was observed. Further, in each of Sample Nos. 13 and 14 as comparative examples, a change in a transmittance (absorbance) before and after the heat treatment was large.

Next, the second invention is described.

A production method of the present invention includes, first, blending raw material powder so as to comprise, in terms of mass%, 55 to 73% of $SiO_2$, 17 to 25% of $Al_2O_3$, 2 to 5% of $Li_2O$, 2.6 to 5.5% of $TiO_2$, 0.01 to 0.3% of $SnO_2$, and 0.02 to 0.2% of $V_2O_5$, and being free of $As_2O_3$ and $Sb_2O_3$. The reason why the composition is limited as above is described below.

Regarding $SiO_2$, $Al_2O_3$, and $Li_2O$, the reason for the limitation of the contents thereof and the preferred range of the contents are the same as those in the first invention described above, and hence the descriptions thereof are omitted.

$TiO_2$ is a component that forms crystal nuclei for precipitating crystals in a crystallization step, and has a function of enhancing the coloration of tetravalent V ions. The content of $TiO_2$ is 2.6 to 6.5%, preferably 2.6 to 5%, more preferably 2.8 to 4.8%, still more preferably 3 to 4.5%. When the content of $TiO_2$ decreases, the amount of $TiO_2$ that is not used as crystal nuclei and remains in a matrix glass phase becomes small. Therefore, $TiO_2$ is hard to be bonded to the tetravalent V ions, and the efficiency of the coloration tends to decrease. Further, proceeding with crystallization during a long period of use, as described above, the concentrations of the tetravalent V ions and $TiO_2$ in the glass matrix increase, and the bonding state therebetween changes. Therefore, the degree of coloring tends to change unreasonably (in particular, the color tends to become deep). Further, a sufficient number of crystal nuclei are not formed, and hence the grain diameter of a crystal growing from each crystal nucleus becomes large (coarse crystal) to generate white turbidity, so that transparent crystallized glass is hard to be obtained. On the other hand, when the content of $TiO_2$ increases, glass tends to be devitrified during the step from melting to forming, and thus the glass becomes liable to be broken, which makes forming of glass difficult.

$SnO_2$ is a component that increases the tetravalent V ions as a coloring component to enhance the coloration. The content of $SnO_2$ is 0.01 to 0.3%, preferably 0.03 to 0.25%, more preferably 0.05 to 0.23%. When the content of $SnO_2$ decreases, the tetravalent V ions are not generated efficiently, and hence the effect of the coloration is hard to be enhanced. When the content of $SnO_2$ increases, glass tends to be devitrified during melting and forming, which makes forming of glass difficult. Further, a color tone tends to change easily due to slight differences in melting conditions and crystallization conditions even with the same composition.

$V_2O_5$ is a coloring component. The content of $V_2O_5$ is 0.02 to 0.2%, preferably 0.03 to 0.15%. When the content of $V_2O_5$ decreases, the coloring becomes weak, so that visible light cannot be shielded sufficiently. On the other hand, when the content of $V_2O_5$ increases, the transmittance of infrared light tends to decrease. Further, crystal transition from a β-quartz solid solution to a β-spodumene solid solution becomes liable to be occurred, which may cause white turbidity.

$As_2O_3$ and $Sb_2O_3$ are not substantially contained for the above-mentioned reasons.

Further, in addition to the above-mentioned components, various components can be added in a range not impairing the required characteristics. For example, MgO, ZnO, $ZrO_2$, $P_2O_5$, $Na_2O$, $K_2O$, CaO, SrO, BaO, $SO_2$, and Cl may be added in the same content ranges for the same reasons described regarding the first invention in the foregoing. In the case where $ZrO_2$ is added, the total amount of $TiO_2$ and $ZrO_2$ is 3.8 to 6.5%, preferably 4.2 to 6%. When the total amount of these components increases, glass tends to be devitrified during melting and forming steps, which makes forming of the glass difficult. On the other hand, when the total amount of these components is too small, crystal nuclei are not formed sufficiently. Therefore, the crystal is liable to become coarse. As a result, transparent crystallized glass is hard to be obtained due to white turbidity. Further, it is preferred to minimize the contents of colored transition metal elements (for example, Cr, Mn, Fe, Co, Ni, Cu, Mo, and Cd) for the above-mentioned reasons.

The raw material powder blended as described above is melted to obtain crystallizable precursor glass. Although a melting temperature is not particularly limited, the melting temperature ispreferably, for example, 1600 to 1900˚C so as to allow vitrification toproceedsufficiently. As a formingmethodof molten glass, various forming methods such as a blow method, a press method, a roll-out method, and a float method are applicable. The formed precursor glass is subjected to annealing, if required.

Next, the precursor glass is heat-treated in a temperature range of 765 to 785˚C for at least 10 minutes. In the heat treatment step, crystal nuclei can be precipitated. When the heat treatment temperature is out of the range, a sufficient number of crystal nuclei are hard to be formed. The temperature range of 765 to 785˚C is a range in which crystal nuclei are most likely to be formed, and thus crystal nuclei can be formed sufficiently. When the heat treatment time is shorter than 10 minutes, the color of glass immediately after the crystallization is pale, and white turbidity tends to occur. On the other hand, even when the heat treatment time is too long, the amount of crystal nuclei to be formed is unlikely to become large, which is rather disadvantageous for productivity and energy aspects. Therefore, the upper limit of the heat treatment time is preferably 10 hours or less, 3 hours or less, particularly 2 hours or less.

The precursor glass in which the crystal nuclei have been formed is further heat-treated to grow crystals, and thus desired crystallized glass is obtained. Here, the heat treatment is conducted at 800 to 930˚C, preferably 850 to 920˚C, more preferably 870 to 890˚C for at least 10 minutes in order to promote the crystallization sufficiently. When the heat treatment time is shorter than 10 minutes, the color of glass immediately after the crystallization is pale, and white turbidity tends to occur. On the other hand, even when the heat treatment time is too long, the amount of crystal nuclei to be formed is unlikely to become large, which is rather disadvantageous for productivity and energy aspects. Therefore, the upper limit of the heat treatment time is preferably 10 hours or less, 3 hours or less, particularly 2 hours or less.

The crystallized glass obtained by the production method of the present invention, when having a thickness of 3 mm, has a transmittance at a wavelength of 700 nm of preferably 35% or less, more preferably 30% or less. Thus, the internal structure of a cooking device can be shielded sufficiently. On the other hand, when a temperature, a thermal power, or the like is displayed using an LED or the like, the transmittance at a wavelength of 700 nm of the glass having a thickness of 3 mm is preferably 15% or more, more desirably 18% or more. Thus, when the crystallized glass is used for a top plate of a cooking device, the display by an LED or the like can be recognized sufficiently through the crystallized glass.

Further, the crystallized glass of the present invention, when having a thickness of 3 mm, has a transmittance of preferably 85% or more, more preferably 86% or more at a wavelength of 1150 nm, in order to transmit heat rays (infrared rays) efficiently.

It is preferred that, even when the crystallized glass of the present invention is used for such application as a top plate for cooking device for a long period of time, the high infrared light transmittance be not impaired, and further, the visible light transmittance be hard to change. Specifically, it is preferred that the crystallized glass of the present invention has, in an acceleration test, a change amount of a transmittance of 5% or less, 3% or less, particularly 2% or less, at a thickness of 3 mm, at a wavelength of 1150 nm after heat treat treatment at 900˚C for 50 hours. Further, in the above acceleration test, it is preferred that a change amount of a transmittance at a wavelength of 700 nm be 5% or less, 3% or less, particularly 2% or less.

Further, the crystallized glass of the present invention preferably has an absorbance change ratio (calculated using the equation previously described) at a wavelength of 700 nm after the heat treatment at 900˚C for 50 hours of 20% or less, particularly 10% or less.

The thermal expansion coefficient of the crystallized glass of the present invention in a temperature range of 30 to 750˚ is preferably -10 to $30 \times 10^{-7}/˚C$, more preferably -10 to $20 \times 10^{-7}/˚C$. When the thermal expansion coefficient is within this range, glass excellent in thermal shock resistance is obtained.

The crystallized glass obtained by the production method of the present invention may be subjected to post-processing such as cutting, polishing, bending, and reheat pressing, and a surface thereof may be subjected to painting, film coating, or the like.

The crystallized glass thus produced can be used as a top plate for an IH cooking device equipped with an IH heater, a halogen heater cooking device equipped with a halogen heater, and a gas cooking device equipped with a gas burner.

Example 2

Tables 4 and 5 show examples (Sample Nos. 15 to 19) and comparative examples (Sample Nos. 20 to 23) with respect to the second invention.

[Table 4]

| Mass% | | No. 15 | No. 16 | No. 17 | No. 18 | No. 19 |
|---|---|---|---|---|---|---|
| $SiO_2$ | | 67.93 | 66.35 | 68.34 | 68.9 | 69.1 |
| $Al_2O_3$ | | 21.0 | 22.0 | 21.5 | 20.0 | 20.5 |
| $Li_2O$ | | 3.8 | 4.0 | 4.3 | 4.0 | 4.2 |
| $Na_2O$ | | 0.4 | 0.2 | 0.1 | 0.3 | 0.4 |
| $K_2O$ | | 0.3 | 0.3 | - | 0.2 | 0.3 |
| MgO | | 1.0 | 0.7 | 0.2 | 0.5 | 0.3 |
| ZnO | | 0.6 | 0.4 | 0.3 | 0.5 | - |
| $TiO_2$ | | 4.3 | 2.7 | 4.1 | 3.4 | 3.0 |
| $ZrO_2$ | | 0.5 | 2.0 | 0.7 | 1.2 | 1.5 |
| $P_2O_5$ | | - | 1.2 | - | 0.8 | 0.5 |
| $SnO_2$ | | 0.13 | 0.1 | 0.2 | 0.13 | 0.14 |
| $V_2O_5$ | | 0.04 | 0.05 | 0.06 | 0.07 | 0.06 |
| Cl | | - | - | 0.2 | - | - |
| Total | | 100 | 100 | 100 | 100 | 100 |
| Crystallization step | Nucleus formation | 770˚C | 770˚C | 770˚C | 770˚C | 780˚C |
| | | 30 minutes | 30 minutes | 30 minutes | 30 minutes | 30 minutes |
| | Crystal growth | 870˚C 25 minutes | 870˚C 25 minutes | 870˚C 25 minutes | 870˚C 25 minutes | 870˚C 25 minutes |
| Transmittance (%) | After crystallization $\lambda$=700 nm | 27.7 | 30.7 | 24.8 | 25.3 | 29.0 |
| | $\lambda$=1150 nm | 87.2 | 86.3 | 85.8 | 84.8 | 86.1 |
| | After heat treatment $\lambda$=700 nm | 27.1 | 24.3 | 23.8 | 21.7 | 24.1 |
| | $\lambda$=1150 nm | 86.8 | 82.4 | 85.0 | 83.1 | 84.7 |
| Absorbance change ratio (%) ($\lambda$=700 nm) | | 2 | 17 | 3 | 10 | 13 |
| Devitrification | | ○ | ○ | ○ | ○ | ○ |

[Table 5]

| [Mass%] | No. 20 | No. 21 | No. 22 | No. 23 |
|---|---|---|---|---|
| $SiO_2$ | 69.1 | 69.1 | 66.6 | 65.5 |
| $Al_2O_3$ | 20.5 | 20.5 | 22.0 | 21.9 |
| $Li_2O$ | 4.2 | 4.2 | 4.0 | 4.4 |
| $Na_2O$ | 0.4 | 0.4 | 0.5 | 0.3 |
| $K_2O$ | 0.3 | 0.3 | 0.3 | 0.3 |
| MgO | 0.3 | 0.3 | 1.0 | 0.8 |
| ZnO | - | - | 0.8 | 1.7 |
| $TiO_2$ | 3.0 | 3.0 | 2.4 | 4.3 |
| $ZrO_2$ | 1.5 | 1.5 | 2.2 | - |
| $P_2O_5$ | 0.5 | 0.5 | - | - |
| $SnO_2$ | 0.14 | 0.14 | 0.15 | - |
| $V_2O_5$ | 0.06 | 0.06 | 0.05 | 0.1 |

(continued)

| [Mass%] | | | No. 20 | No. 21 | No. 22 | No. 23 |
|---|---|---|---|---|---|---|
| As$_2$O$_3$ | | | - | - | - | 0.7 |
| Total | | | 100 | 100 | 100 | 100 |
| Crystallization step | Nucleus formation | | 780˚C 5 minutes | 750˚C 30 minutes | 780˚C 30 minutes | 780˚C 30 minutes |
| | Crystal growth | | 870˚C 25 minutes | 870˚C 25 minutes | 870˚C 25 minutes | 870˚C 25 minutes |
| Transmittance (%) | After crystallization | λ=700 nm | 15.4* | 33.7 | 34.3 | 24.4 |
| | | λ=1150 nm | 73.5 | 86.4 | 86.5 | 84.2 |
| | After heat treatment | λ=700 nm | 12.3 | 25.3 | 23.2 | 12.3 |
| | | λ=1150 nm | 69.3 | 84.7 | 81.7 | 80.2 |
| Absorbance change ratio (%) (λ=700 nm) | | | 11 | 21 | 27 | 43 |
| Devitrification | | | ◯ | o | o | o |

Raw glass materials were blended so as to obtain the compositions described in Tables 4 and 5, and melted at 1600˚C for 20 hours, further at 1700˚C for 4 hours, using a platinum crucible. Two spacers each with a thickness of 5 mm were placed on a carbon plate, and molten glass was poured between the spacers and formed into a plate shape with a uniform thickness using a roller.

The resultant plate shaped sample was placed in an electric furnace kept at 700˚C and held for 30 minutes. After that, a power source was turned off to cool (anneal) the sample to room temperature in the furnace over 10 hours or more.

Then, the cooled sample was crystallized by heat treatment in the electric furnace to obtain crystallized glass. Tables 4 and 5 show the profile of heat treatment of each sample. A rate of temperature rise from room temperature to nucleus formation temperature was set to 15˚C/min, a rate of temperature rise from the nucleus formation temperature to crystal growth temperature was set to 10˚C/min, and a rate of temperature fall from the crystal growth temperature to the room temperature was set to 80˚C/min.

Each crystallized glass was evaluated for its transmittance in each of visible and infrared regions and devitrification property.

Each crystallized glass was processed into a sample having a thickness of 3 mm with both surfaces which are mirror polished, and the transmittance thereof was measured at 700 nm and 1150 nm, using a spectrophotometer (manufactured by Jasco Corporation, V-760). The measurement conditions were as follows: a measurement range of 1500 to 380 nm and a scan speed of 200 nm/min. Further, the samples subjected to heat treatment at 900˚C for 50 hours (acceleration test) were also measured for transmittance similarly. Further, an absorbance change ratio after the acceleration test was calculated according to the equation described above.

The devitrification property was evaluated by placing each sample on a platinum foil in an electric furnace set to 1350˚C, keeping the sample in that state for 24 hours, and determining whether or not devitrification occurred. If the devitrification was not observed, the evaluation was made as "o", and if the devitrification was observed, the evaluation was made as "×".

As is apparent from Tables 4 and 5, it is understood that the crystallized glass of each of Sample Nos. 15 to 19 as examples is capable of shielding light in the visible light region sufficiently, has high infrared light transmittance, and has small absorbance change ratio in the visible light region even in an acceleration test in which long-term use is assumed.

On the other hand, in the crystallized glass of each of Sample Nos. 21 to 23 as comparative examples, an absorbance change ratio in the visible region after the acceleration test was large. The external appearance of the crystallized glass of Sample No. 20 as a comparative example became white turbidity.

Industrial Applicability

The crystallized glass of the present invention is suitable as a top plate for a cooking device with, for example, gas, IH, or a halogen heater. Further, the crystallized glass of the present invention can also be used for an inspection window for observing the inside of a high-temperature furnace, a fireproof window, and the like for each of which low-expansion crystallized glass containing a β-quartz solid solution as a main crystal has been used conventionally.

**Claims**

1.  A crystallized glass, comprising, in terms of mass%, 55 to 73% of $SiO_2$, 17 to 25% of $Al_2O_3$, 2 to 5% of $Li_{2O}$, 4 to 5.5% of $TiO_2$, 0.05 to less than 0.2% of $SnO_2$, and 0.02 to 0.1% of $V_2O_5$, wherein the crystallized glass has a ratio $V_2O_5/(SnO_2+V_2O_5)$ of 0.2 to 0.4 and is substantially free of $As_2O_3$ and $Sb_2O_3$.

2.  A crystallized glass according to claim 1, further comprising 0.5% or less of $Na_2O$.

3.  A crystallized glass according to claim 1 or 2, further comprising 0 to 2.3% of $ZrO_2$.

4.  A crystallized glass according to claim 3, wherein a total amount of $TiO_2$ and $ZrO_2$ is 4 to 6.5%.

5.  A crystallized glass according to any one of claims 1 to 4, wherein the crystallized glass has a transmittance of 35% or less at a wavelength of 700 nm and a transmittance of 85% or more at a wavelength of 1150 nm when the crystallized glass has a thickness of 3 mm.

6.  A top plate for cooking device, comprising the crystallized glass according to any one of claims 1 to 5.

7.  A method of producing crystallized glass, comprising the steps of: (1) blending raw material powder so as to comprise, in terms of mass%, 55 to 73% of $SiO_2$, 17 to 25% of $Al_2O_3$, 2 to 5% of $Li_2O$, 2.6 to 5.5% of $TiO_2$, 0.01 to 0.3% of $SnO_2$, and 0.02 to 0.2% of $V_2O_5$, and being substantially free of $As_2O_3$ and $Sb_2O_3$; (2) melting the raw material powder to produce precursor glass; and (3) heat-treating the precursor glass in a temperature range of 765 to 785 ˚C for at least 10 minutes to form crystal nuclei in the precursor glass.

8.  A method of producing crystallized glass according to claim 7, further comprising the step of (4) heat-treating the precursor glass, in which the crystal nuclei have been formed, in a temperature range of 800 to 930˚C for at least 10 minutes to grow crystals.

9.  A crystallized glass, which is produced by the method according to claim 7 or 8.

10. A crystallized glass according to claim 9, wherein the crystallized glass has an absorbance change ratio of 20% or less at a wavelength of 700 nm after heat treatment at 900˚C for 50 hours.

11. A top plate for cooking device, comprising the crystallized glass according to claim 9 or 10.

EP 2 394 970 A1

## INTERNATIONAL SEARCH REPORT

| | International application No. |
|---|---|
| | PCT/JP2010/051490 |

### A. CLASSIFICATION OF SUBJECT MATTER
C03C10/14(2006.01)i, F24C15/10(2006.01)i, H05B6/12(2006.01)i

According to International Patent Classification (IPC) or to both national classification and IPC

### B. FIELDS SEARCHED

Minimum documentation searched (classification system followed by classification symbols)
C03C1/00-14/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
INTERGLAD

### C. DOCUMENTS CONSIDERED TO BE RELEVANT

| Category* | Citation of document, with indication, where appropriate, of the relevant passages | Relevant to claim No. |
|---|---|---|
| X | JP 11-100230 A (Nippon Electric Glass Co., Ltd.), 13 April 1999 (13.04.1999), claims 1, 2; paragraph [0007]; examples (Family: none) | 1-11 |
| X | JP 11-100231 A (Nippon Electric Glass Co., Ltd.), 13 April 1999 (13.04.1999), claims 1 to 3; examples (Family: none) | 1-11 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 April, 2010 (13.04.10) | 27 April, 2010 (27.04.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

14

**INTERNATIONAL SEARCH REPORT**

| International application No. |
|---|
| PCT/JP2010/051490 |

C (Continuation).    DOCUMENTS CONSIDERED TO BE RELEVANT

| Category* | Citation of document, with indication, where appropriate, of the relevant passages | Relevant to claim No. |
|---|---|---|
| X | US 2007/0129231 A1  (Marie Jacqueline Monique Comte), 07 June 2007 (07.06.2007), claims; paragraphs [0035], [0056], [0080] & JP 2009-527436 A        & EP 1957421 A & WO 2007/065910 A1        & FR 2902421 A & FR 2902420 A          & KR 10-2008-0080615 A & CN 101356128 A | 1-11 |
| X | JP 2004-523446 A  (Carl-Zeiss-Stiftung), 05 August 2004 (05.08.2004), claim 5; paragraph [0038] & US 2003/0218001 A1      & EP 1313675 A & EP 2088130 A1          & WO 2002/016279 A1 & CA 2422405 A          & CN 1454189 A | 1-6,9-11 |
| X Y | JP 11-100229 A  (Nippon Electric Glass Co., Ltd.), 13 April 1999 (13.04.1999), claims 1, 2; paragraph [0019]; examples (Family: none) | 1-11 1-4,6 |
| X Y | JP 2009-500282 A  (Eurokera), 08 January 2009 (08.01.2009), claims 1 to 4, 6; examples & US 2007/0004578 A1      & EP 1899276 A & WO 2007/003566 A1      & FR 2887870 A & KR 10-2008-0023360 A    & CN 101213152 A | 9-11 1-4,6 |

Form PCT/ISA/210 (continuation of second sheet) (July 2009)

**INTERNATIONAL SEARCH REPORT**

International application No.

PCT/JP2010/051490

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:
   The invention in claim 1 does not have a novelty and a special technical feature, since the invention is described in the following documents 1 - 4. Consequently, the invention in claim 1 does not satisfy the requirement of unity.
   The inventions in claims as indicated below are relevant to main invention.
   Claims 1 - 6
   Document 1: JP 11-100230 A
   Document 2: JP 11-100231 A
   Document 3: US 2007/0129231 A1
   Document 4: JP 2004-523446 A

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**   ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**EP 2 394 970 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3009056 B
- JP 2003068435 A
- JP 2004523446 A